Europäisches Patentamt

European Patent Office

Office européen des brevets

(19)

(11) Veröffentlichungsnummer: **0 242 824 B1**

(12) **EUROPÄISCHE PATENTSCHRIFT**

(45) Veröffentlichungstag der Patentschrift: **13.07.94**

(51) Int. Cl.5: **A24C 5/34**, G05B 11/32

(21) Anmeldenummer: **87105731.1**

(22) Anmeldetag: **16.04.87**

(54) **Verfahren und Vorrichtung zur Regelung von mindestens zwei für die Oualität des fertigen Produktes massgeblichen physikalischen Eigenschaften eines aus rauchbarem Material hergestellten Strangs.**

(30) Priorität: **24.04.86 DE 3613957**

(43) Veröffentlichungstag der Anmeldung:
**28.10.87 Patentblatt  87/44**

(45) Bekanntmachung des Hinweises auf die
Patenterteilung:
**13.07.94 Patentblatt  94/28**

(84) Benannte Vertragsstaaten:
**BE CH GB IT LI NL**

(56) Entgegenhaltungen:
**EP-A- 0 032 399**
**DE-A- 3 329 973**
**FR-A- 2 547 994**
**GB-A- 2 028 098**

(73) Patentinhaber: **B.A.T. Cigarettenfabriken
GmbH
Alsterufer 4
D-20354 Hamburg(DE)**

(72) Erfinder: **Gaisser, Horst, Dipl.-Ing.
Dorfstrasse 12
D-2087 Hassloh(DE)**
Erfinder: **Henning, Paul-Georg, Dr.,**
**Dipl.-Chem.
Harksheider Weg 81
D-2085 Ouickborn(DE)**
Erfinder: **Kühne, Manfred, Prof. Dipl.-Ing.
Sommerbergstrasse 22
D-7743 Furtwangen 1(DE)**
Erfinder: **Masurat, Heinz-Werner
Grosse Twiete 5 a
D-2081 Tangstedt(DE)**
Erfinder: **Meyer, Meinhard, Dipl.-Ing.
Ziegeleiweg 38
D-2081 Appen-Unterglinde(DE)**
Erfinder: **Walther, Friedrich, Dipl.-Ing.
Westpreussenstrasse 32 a
D-2072 Bargteheide(DE)**

(74) Vertreter: **Schwabe - Sandmair - Marx
Stuntzstrasse 16
D-81677 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur Regelung von physikalischen Eigenschaften eines aus rauchbarem Material hergestellten Strangs der im Oberbegriff des Anspruchs 1 bzw. des Anspruchs 6 angegebenen Gattung.

Obwohl ähnliche Probleme auch bei anderen rauchbaren Artikeln auftreten, soll im folgenden auf diesen Problemkreis nur noch in Verbindung mit der Herstellung von Cigaretten eingegangen werden.

Bei der Herstellung von Cigaretten werden verschiedene Techniken eingesetzt, um die kontinuierliche Regelung der physikalischen Eigenschaften des Strangs von Tabakfasern während der Cigarettenherstellung und damit schließlich der entsprechenden Eigenschaften der fertigen Cigaretten zu ermöglichen. So ist es bspw. bekannt, die für die Gewichtskonstanz der Cigarette wesentliche Dichte des Strangs, die wiederum seinem Gewicht entspricht, zu bestimmen, den ermittelten ist-Wert mit einem Soll-Wert zu vergleichen und die Ausbildung des Strangs in Abhängigkeit von dem Ergebnis des Vergleiches zu steuern (DE-OS 2 208 944). Zur Messung der Dichte kann bspw. die Absorption von Strahlen in dem Strang von Tabakfasern, insbesondere Beta-Strahlen oder Mikrowellen, dienen.

Weiterhin geht aus der DE-OS 2 728 797 ein Verfahren zum Herstellen von Cigarettenfiltern hervor, bei dem der Zugwiderstand des Filterwergs ermittelt, mit einem Soll-Wert verglichen und das Ergebnis des Vergleiches für die Filterwergzuführung benutzt wird; dabei wird die Wergzuführung so gesteuert, daß der Druckabfall über dem gemessenen Werg im wesentlichen konstant bleibt.

Ein weiteres Verfahren geht aus der EP-OS 32 399 hervor, wobei die Feuchtigkeit, die Masse, die Maschinengeschwindigkeit und die Härte eines Strangs von Tabakfasern für die Regelung ermittelt werden; der gemessene Härte-Wert wird mittels der anderen Parameter, nämlich Feuchtigkeit, Masse und Maschinengeschwindigkeit, korrigiert, wodurch ein korrigierter Ist-Wert erhalten wird, der mit einem Soll-Wert verglichen wird. In Abhängigkeit von dem Ergebnis dieses Vergleiches werden die Trimmerscheiben verstellt, die bei der Strangbildung eine bestimmte Höhe des Tabakstrangs einstellen.

Geeignete Fühler zur Erfassung der Härte des Tabakstrangs gehen aus der DE-OS3 306 543 bzw. der DE-OS 3 404 635 hervor.

Das bisher in der Praxis übliche Verfahren der Gewicht/Dichte-Regelung hat jedoch die folgenden Nachteile: Bei Änderungen der Tabakfüllfähigkeit kann es zu großen Abweichungen des Zugwiderstands bzw. der Härte des Tabakstrangs und damit zu Endenausfall kommen; große Abweichungen im Zugwiderstand wirken sich wiederum ungünstig auf die Zügigkeit, die Geschmacksfülle und den Charakter sowie den Ventilationsgrad der fertigen Cigarette aus. Die Härte und der damit verbundene Endenausfall einer Cigarette stellen andererseits für den Konsumenten ein wichtiges Qualitätsmerkmal dar.

Die Regelung der Härte, gegebenenfalls auch unter Berücksichtigung von Feuchtigkeit, Masse und Maschinengeschwindigkeit, führt jedoch ebenfalls zu Problemen, da nun zwar ein wichtiges Qualitätsmerkmal konstant gehalten werden kann, jedoch die anderen physikalischen Eigenschaften, insbesondere Dichte/Gewicht und Zugwiderstand nicht mehr berücksichtigt werden. Hier kann es also wiederum zu starken Schwankungen kommen, die sich ungünstig auf die Qualität der fertigen Cigarette auswirken.

Weitere Probleme ergeben sich darüberhinaus durch den Einsatz von expandiertem und rekonstituiertem Tabak, wie er in zunehmendem Maße verwendet wird. Denn bei Mischungsschwankungen "erkennt" der Fühler für die Dichte bzw. das Gewicht des Tabakstranges zu wenig Tabak, d.h., anteilsmäßig enthält der Strang zuviel expandierten Tabak in seiner Mischung, so daß das Stellglied für die Gewichtsregelung, im allgemeinen die Trimmerscheiben, in Richtung einer Vergrößerung des Stranges verstellt werden und dadurch mehr Tabak in die Cigarette gelangt. Dadurch erhöhen sich jedoch der Zugwiderstand und die Härte der Cigaretten und damit wichtige Qualitätsmerkmale für den Konsumenten; Änderung im Zugwiderstand und in der Härte werden von diesem in aller Regel früher erkannt als geringe Gewichtsschwankungen der Cigarette.

Der Erfindung liegt deshalb die Aufgabe zugrunde, ein Verfahren und eine Vorrichtung zur Regelung von mindestens zwei für die Qualität des fertigen Produktes maßgeblichen physikalischen Eigenschaften eines Strangs aus rauchbarem Material, insbesondere bei der Cigarettenherstellung, zu schaffen, bei denen im fertigen Produkt keine dieser Eigenschaften außerhalb vorgegebener Grenzwerte liegt.

Dies wird erfindungsgemäß bei einem Verfahren der angegebenen Gattung durch die im kennzeichnenden Teil des Anspruchs 1 angegebenen Merkmale erreicht.

Bei einer Vorrichtung der angegebenen Gattung zur Durchführung des Verfahrens wird dies durch die Merkmale des Kennzeichens des Anspruchs 6 erreicht.

Zweckmäßige Ausführungsformen werden durch die Merkmale der Unteransprüche definiert.

Die mit der Erfindung erzielten Vorteile beruhen darauf, daß mindestens zwei ausgewählte physikalische Eigenschaften des Strangs aus rauchbarem Material, nach einer bevorzugten Ausführungsform die Härte, der Zug-Widerstand und/oder das Gewicht des Strangs bzw. des rauchbaren Artikels innerhalb gewisser Toleranzgrenzen auf konstante Werte geregelt werden. Dabei werden die gewonnenen Regelsignale für mindestens zwei dieser drei Größen, - nach einer bevorzugten Ausführungsform für den Zugwiderstand und die Härte -,miteinander verglichen und jeweils das momentan größte Regelsignal auf ein einziges Stellglied für den Tabakmassenstrom, insbesondere Trimmerscheiben oder einen Ausbreiter, gegeben.

Dieses Verfahren kann bei allen bereits installierten gängigen Cigarettenherstellungsmaschinen durch Nachrüstung eingesetzt werden, indem die entsprechenden Fühler für die Ist-Werte der verschiedenen physikalischen Größen eingebaut und ihre Ausgangssignale auf die beanspruchte Weise verarbeitet werden.

Die Regelungseinrichtung verwendet nur die herkömmlichen Bausteine von Kompakt-Reglern, wie sie problemlos erhältlich sind, d. h., es sind keine Sonderanfertigungen erforderlich; als Alternative hierzu kann die Regelungseinrichtung auch durch einen programmierbaren Mikroprozessor realisiert werden.

Außerdem ermöglicht dieses Verfahren eine exaktere Einstellung der wesentlichen Qualitätsparameter einer Cigarette, so daß sich der Ausschuß verringert, da als Regelgrößen die unmittelbaren Qualitätskenngrößen Zugwiderstand und Deformation dienen.

Zur schaltungstechnischen Realisierung des Verfahrens dient eine Auto-Selector-Schaltlogik, die allgemein auch als Auswahlschaltung oder im vorliegenden Fall als Maximum-Auswahlschaltung bezeichnet wird. Die entsprechenden regelungstechnischen Maßnahmen können durch Regler realisiert werden.

Bei der für die Cigarettenstrangregelung nur in Frage kommenden Maximum-Auswahl wirkt auf das Stellglied, nämlich auf Trimmerscheiben oder den Ausbreiter, nur der Regler, der momentan die größte Stellgröße hat, so daß man auch von "override-control" spricht.

Die Übernahme der Regelung von dem gerade aktiven Regler auf den bzw. auf einen wartenden Regler geschieht immer dann, wenn das Ausgangssignal des bzw. eines wartenden Reglers größer als das des tätigen Reglers wird. Dabei muß während des Betriebes jederzeit eine stoßfreie Übernahme von dem gerade im Eingriff befindlichen Regler auf den bzw. auf einen wartenden Regler gewährleistet sein. Dazu muß das Rückführsignal aller Regler mit dem augenblicklichen Wert der Stellgröße, die am Stellglied wirkt, beaufschlagt werden.

Es ist möglich, die Ausgangssignale von mindestens zwei Fühlern durch Addierglieder mit Wichtung, wie sie in der Regeltechnik üblich sind, miteinander zu kombinieren und dadurch eine weitere "Feinabstimmung" für das Regelverhalten zu erreichen.

Die gleichzeitige Überwachung bzw. Regelung von mehreren physikalischen Eigenschaften, wie z. B. der Härte und der Masse bzw. der Höhe des Stranges im Verlaufe der Cigarettenherstellung ist dem Fachmann allgemein bekannt, wobei jedoch eine Verknüpfung der Regelungen stets im wesentlichen nach dem Prinzip der Kaskadenregelung vorgenommen wird. Die Anwendung des Vorrang- bzw. Auswahl-Regelprinzips wurde auf dem Gebiet der Strangherstellung rauchbarer Artikel bisher nicht in Betracht gezogen.

Die Erfindung wird im folgenden anhand von Ausführungsbeispielen unter Bezugnahme auf die beiliegenden, schematischen Zeichnungen näher erläutert. Es zeigen

Fig. 1      den Grundaufbau einer Regelvorrichtung für Zugwiderstand und Härte,

Fig. 2      eine andere Ansicht einer Regelvorrichtung für Härte, Zugwiderstand und Gewicht,

Fig. 3      eine Ausführungsform, bei der die Ausgangssignale von zwei Fühlern durch Addierglieder mit Wichtung kombiniert werden.

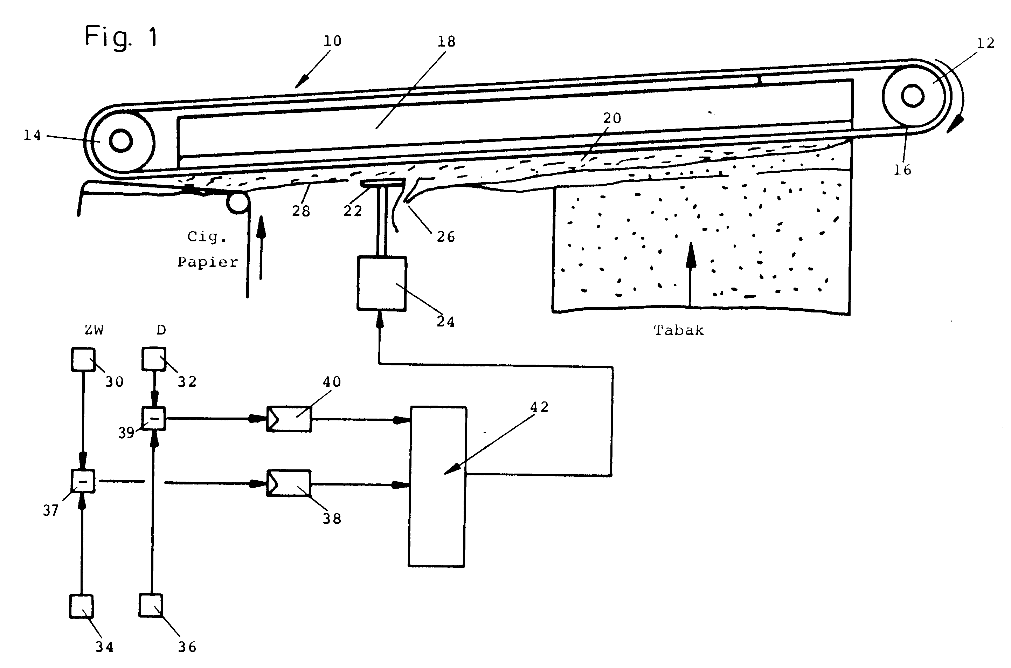

Die aus Fig. 1 ersichtliche, allgemein durch das Bezugszeichen 10 angedeutete Strangmaschine weist zwei drehbar gelagerte Rollen 12 und 14 auf, von denen mindestens eine angetrieben wird. Über die beiden Rollen 12 und 14 läuft ein perforiertes, als Fördereinrichtung dienendes Band 16. Zwischen den beiden Trümmern des Bandes 16 ist eine Unterdruckkamner 18 angeordnet.

Der von unten in Pfeilrichtung antransportierte Tabak wird durch den Unterdruck an das in Pfeilrichtung umlaufende Band 16 angesaugt und mitgenommen, so daß sich eine Tabakschicht 20 an dem Band 16 ausbildet. Zur Einstellung einer Tabakschicht 20 bestimmter Höhe dient ein "Egalisator", nämlich Trimmerscheiben 22, die gemäß der Darstellung in Figur 1 in vertikaler Richtung über einen Stellmotor 24 verschoben werden können. Der von den Trimmerscheiben 22 abgetrennte Überschuß-Tabak ist durch das Bezugszeichen 26 angedeutet.

Dadurch entsteht an dem Band 16 eine egalisierte Tabakschicht bestimmter Höhe, die durch das Bezugszeichen 28 angedeutet ist und mittels eines Formatfingers auf Strangform gebracht und vom Cigarettenpapier umhüllt wird.

Als Alternative zu dem "Egalisator" kann das Stellglied für die Einstellung des Massenstroms des Tabaks auch durch einen Ausbreiter gebildet werden.

Am Tabakstrang oder an der fertigen, auf die jeweilige Länge geschnittene Cigarette werden zwei physikalische Eigenschaften gemessen, nämlich der Zugwiderstand ZW bzw. die Härte oder Deformation D.

Die entsprechenden Ist-Werte werden von einem Fühler 30 für den Zugwiderstand ZW und einem Fühler 32 für die Deformation D zusammen mit den entsprechenden Soll-Werten von Soll-Wertgebern 34 bzw. 36 auf ein erstes Differenzglied 37 für den Zugwiderstand ZW und ein zweites Differenzglied 39 für die Härte bzw. Deformation D gegeben. Die Differenzsignale von den beiden Differenzgliedern 37, 39 werden auf zugehörige Regler 38, 40 geführt, die entsprechende Regelsignale, im allgemeinen nach einer vorgegebenen Regelcharakteristik, bilden.

Die beiden Regelsignale werden auf eine Auto-Selector-Schaltung 42 geführt, die das jeweils größte der Regelsignale feststellt und den Stellmotor 24 für die Trimmerscheiben 22 mittels dieses größten Regelsignals ansteuert.

Beim normalen Betrieb wird die Lage der Trimmerscheiben 22 in Abhängigkeit vom Zugwiderstand ZW eingestellt, d. h., der Zugwiderstandsregler 38 steuert die Strangherstellung.

Bei einem zu starken Anstieg der Deformation D bzw. Verringerung der Härte entspricht jedoch das Endprodukt Cigarette nicht mehr den Vorgaben, so daß bei einem zu großen Ausgangssignal des Reglers 40 dieser die Führung der Trimmerscheiben 22 übernimmt, d. h., in diesem Fall wählt die Auto-Selector-Schaltung 42 das Ausgangssignal des Reglers 40 aus und benutzt dieses von der gemessenen Deformation D abhängige Regelsignal für die Einstellung der Trimmerscheiben 22.

Zwangsläufig treten nun geringe Abweichungen im Zugwiderstand ZW auf; diese können jedoch im Vergleich mit zu starken Schwankungen der Deformation D bzw. der Härte akzeptiert werden.

In einem solchen Fall, der beispielsweise durch Einwirken von Störgrößen, insbesondere durch inhomogenen Schnittabak, verursacht werden kann, bleibt die eigentliche Regelgröße, nämlich der Zugwiderstand ZW, ungeregelt, bis die Bedingungen bei der Strangbildung eine erneute Übernahme in den Normal betrieb gestatten. Auch diese erneute Übergabe erfolgt - in ähnlicher Weise wie beim Übergang von der Zugwiderstandsregelung auf die Härteregelung - automatisch und stoßfrei.

Nach Abklingen der eingetretenen Störungen, beispielsweise der inhomogenen Kondition des Schnittabakes (Tabakvlies), verringert sich die Deformation D bzw. nimmt die Härte zu, so daß nun wieder der Regler 38 für den Zugwiderstand ZW die Einstellung der Trimmerscheiben 22 übernimmt.

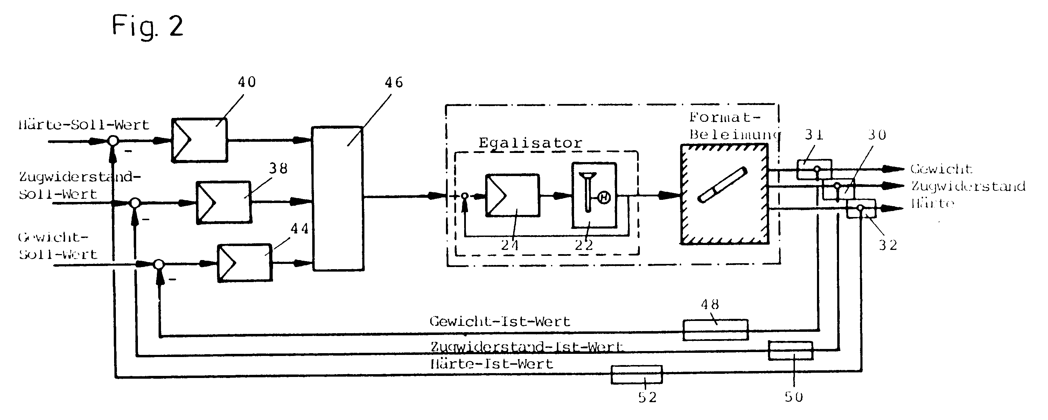

Figur 2 zeigt in einer anderen Darstellungsart eine Ausführung mit drei Regelgrößen, d. h., neben Zugwiderstand ZW und Härte bzw. Deformation D wird noch eine Gewichtsregelung vorgenommen. Die Verknüpfung der drei Regel strecken mit den Reglern 38, 40 und 44 erfolgt über eine Auto-Selector-Schaltung 46, die den Stellmotor 24 für den Egalisator, nämlich die Trimmerscheiben 22, ansteuert. In dieser Figur sind außerdem noch die Formatierung und die Beleimung mit den anschließenden. Fühlern 30, 31 und 32 für das Gewicht, den Zugwiderstand ZW und die Härte bzw. Deformation D des Tabakstrangs bzw. der fertigen Cigarette angedeutet.

In den Leitungen, die die Ist-Werte für Gewicht, Zugwiderstand und Härte von den Fühlern 30, 31 und 32 den jeweiligen Reglern 38, 40 und 44 zuführen, befinden sich Grenzwertschaltungen 48, 50 und 52, die in an sich bekannter Weise den jeweiligen Ist-Wert mit einem vorgegebenen Grenzwert vergleichen und bei Überschreiten eines dieser Grenzwerte ein Ausstoßsignal erzeugen, d. h., die zugehörige Cigarette wird als Ausschuß festgestellt und beispielsweise durch Ausblasen ausgestoßen.

Schließlich können diesem Regelsystem noch weitere Größen, nämlich beispielsweise die Geschwindigkeit des Tabakstranges oder die Feuchtigkeit des Tabaks aufgeschaltet werden. Diese Größen werden mit den Ausgangssignalen der Fühler 30, 31 32 verknüpft, so daß anschließend korrigierte Ist-Werte für die Regelung vorliegen.

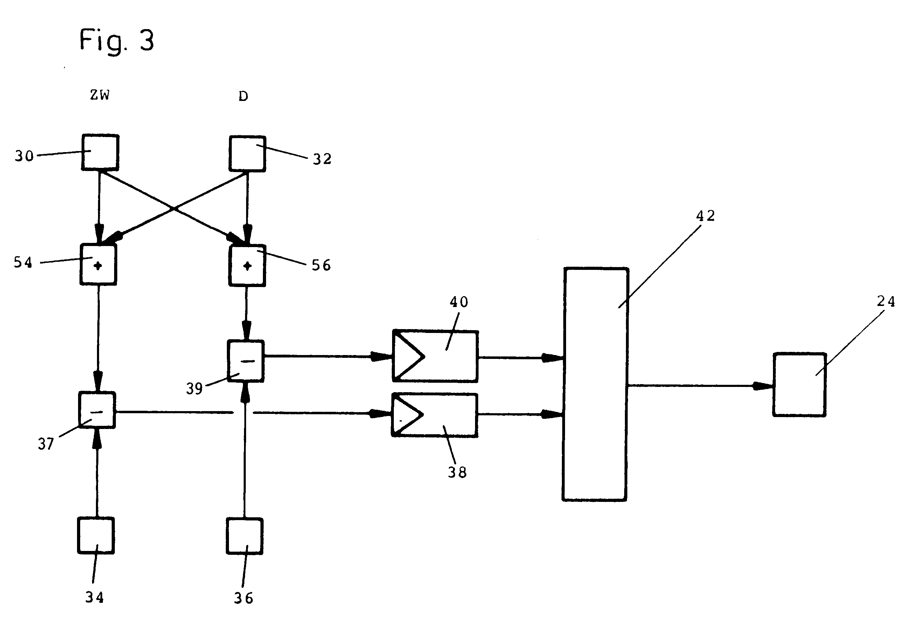

Figur 3 zeigt eine Ausführungsform, bei der die beiden Ist-Werte für den Zugwiderstand ZW und die Härte bzw. Deformation D von den beiden Fühlern 30, 32 auf zwei Addierglieder 54, 56 mit Wichtung gegeben werden, wie sie in der Regeltechnik für die Linearkombination von Ist-Größen verwendet werden.

Die Ausgangssignale der beiden Addierglieder 54, 56 werden dann auf die beiden Differenzglieder 37, 39 gegeben. Die weitere Verarbeitung erfolgt wie bei der Ausführungsform nach Fig. 1.

Die Ausgangssignale der beiden Fühler 30, 32 werden also durch die beiden Addierglieder 54, 56 so miteinander linear verknüpft, daß die den beiden Differenzgliedern 37, 39 zugeführten Signale die folgende Form haben:

$$\alpha ZW + \beta D$$
$$\gamma ZW + \delta D$$

In entsprechender Weise können auch die Ausgangssignale von drei Fühlern miteinander verknüpft werden.

**Patentansprüche**

1. Verfahren zur Regelung von mindestens zwei der für die Qualität des fertigen Produktes maßgeblichen physikalischen Eigenschaften eines aus rauchbarem Material hergestellten Strangs, insbesondere bei der Cigarettenherstellung,

a) bei dem die Ist-Werte von diesen Eigenschaften erfaßt,

b) die jeweiligen Differenzen zwischen den Ist-Werten und den dazugehörigen vorgegebenen Soll-Werten ermittelt, und

c) aus den ermittelten Differenzen Regelsignale für die Masse des den Strang aufbauenden rauchbaren Materials beeinflussende Stellglieder gewonnen werden,

**dadurch gekennzeichnet,** daß

d) die gewonnenen Regelsignale miteinander verglichen werden, und daß

e) jeweils das momentan größte Regelsignal auf ein einziges Stellglied für den Massenstrom des rauchbaren Materials gegeben wird.

2. Verfahren nach Anspruch 1, dadurch gekennzeichnet, daß Regelsignale aus der Härte des Strangs aus rauchbarem Material, aus dem Zugwiderstand des Strangs und/oder aus dem Gewicht des Strangs gewonnen und miteinander verglichen werden.

3. Verfahren nach einem der Ansprüche 1 oder 2, dadurch gekennzeichnet, daß Differenzen von Kombinationen, insbesondere Linear-Kombinationen, aus mindestens zwei Ist-Werten der erfaßten Eigenschaften ermittelt werden.

4. Verfahren nach einem der Ansprüche 1 bis 3, dadurch gekennzeichnet, daß als einziges Stellglied für den Massenstrom des rauchbaren Materials Trimmerscheiben oder ein Ausbreiter verwendet werden.

5. Verfahren nach einem der Ansprüche 1 bis 4, dadurch gekennzeichnet, daß bei der Gewinnung des Regelsignals für mindestens eine der Eigenschaften die Feuchte und/oder die Maschinengeschwindigkeit berücksichtigt werden.

6. Vorrichtung zur Regelung von mindestens zwei der für die Qualität des fertigen Produktes maßgeblichen physikalischen Eigenschaften eines aus rauchbarem Material hergestellten Strangs, zur Durchführung desVerfahrens nach Anspruch 1, insbesondere bei der Cigarettenherstellung,

a) mit mindestens zwei Fühlern (30, 31, 32) für die Erfassung der Ist-Werte von zwei physikalischen Eigenschaften des Strangs, und

b) mit Reglern (38, 40, 44) für die Gewinnung von Regelsignalen für die Masse des den Strang aufbauenden rauchbaren Materials beeinflussende Stellglieder (22) aus den Differenzen zwischen den einzelnen Ist- und Soll-Werten der physikalischen Eigenschaften,

gekennzeichnet durch

c) eine Auto-Selector-Schaltung (42, 46) für den Vergleich der gewonnenen Regelsignale miteinander und für die Zuführung des jeweils momentan größten Regelsignals auf ein einziges Stellglied (22) für den Massenstrom.

7. Vorrichtung nach Anspruch 6, dadurch gekennzeichnet, daß Fühler (30, 31, 32) und Regler (38, 40, 44) für die Härte des Strangs aus rauchbarem Material, für den Zugwiderstand des Strangs und/oder für das Gewicht des Strangs vorgesehen sind.

8. Vorrichtung nach einem der Ansprüche 6 oder 7, dadurch gekennzeichnet, daß zwischen den Fühlern (30, 31, 32) und den Reglern (38, 40, 44) Einrichtungen (54, 56) zum Kombinieren der Ausgangssignale von mindestens zwei Fühlern (30, 31, 32) vorgesehen sind.

9. Vorrichtung nach Anspruch 8, dadurch gekennzeichnet, daß die Kombinationseinrichtungen durch Addierglieder (54, 56) mit Wichtung gebildet werden.

10. Vorrichtung nach einem der Ansprüche 6 bis 9, dadurch gekennzeichnet, daß als einziges Stellglied für den Massenstrom Trimmerscheiben (22) oder ein Ausbreiter verwendet werden.

**Claims**

1. A method for controlling at least two physical properties decisive for the quality of the finished product of a rod made of smokable material, in particular in cigarette manufacture,

a) in which the actual values of said properties are detected,

b) the particular differences between the actual values and the associated predetermined desired values are determinded and

c) from the determined differences control signals are obtained for actuators influencing the mass of the smokable material making up the rod,
characterized in that
d) the control signals obtained are compared with each other, and that
e) the particular instantaneously largest control signal is supplied to a single actuator for the mass flow of the smokable material.

2. A method according to claim 1, characterized in that control signals are obtained from the hardness of the rod of smokable material, the resistance to draw of the rod and/or the weight of the rod and are compared with each other.

3. A method according to one of the claims 1 or 2, characterized in that differences of combinations, in particular linear combinations, are determined from at least two actual values of the detected properties.

4. A method according to one of the claims 1 to 3, characterized in that as single actuator for the mass flow of smokable material an écréteur or a hopper is used.

5. A method according to one of the claims 1 to 4, characterized in that when obtaining the control signal for at least one of the properties the moisture and/or machine speed are taken into account.

6. An apparatus for controlling at least two of the physical properties decisive for the quality of the finished product of a rod made of smokable material for carrying out the method according to claim 1, in particular in cigarette manufacture,
a) having at least two sensors (30, 31, 32) for detecting the actual values of two physical properties of the rod, and
b) having controllers (38, 40, 44) for deriving control signals for actuators (22) influencing the mass of the smokable material making up the rod from the differences between the individual actual values and desired values of the physical properties,
characterized by
c) an auto-selector circuit (42, 46) for the comparison of the obtained control signals with each other and for the supply of the particular instantaneously largest control signal to a single actuator (22) for the mass flow.

7. An apparatus according to claim 6, characterized in that sensors (30, 31, 32) and controllers (38, 40, 44) are provided for the hardness of the rod of smokable material, for the resistance to draw and/or for the weight of the rod.

8. An apparatus according to one of the claims 6 or 7, characterized in that between the sensors (30, 31, 32) and the controllers (38, 40, 44) means (54, 56) are provided for combining the output signals of at least two sensors (30, 31, 32).

9. An apparatus according to claim 8, characterized in that the combining means are formed by weighting adder members (54, 56).

10. An apparatus according to one of the claims 6 to 9, characterized in that as sole actuator for the mass flow an écréteur (22) or a hopper is used.

**Revendications**

1. Procédé permettant de réguler au moins deux des caractéristiques physiques d'un cordon de matière fumable, essentielles à la qualité du produit fini, en particulier dans la fabrication des cigarettes,
a) dans lequel les valeurs effectives de ces caractéristiques sont saisies,
b) dans lequel les écarts entre les valeurs effectives et les valeurs de consigne préétablies qui leur sont affectées sont calculés,
c) et dans lequel des signaux de régulation destinés à des organes de réglage influençant la masse de la matière fumable constituant le cordon sont générés sur la base des écarts relevés,
caractérisé en ce que :
d) les signaux de régulation générés sont comparés entre eux, et en ce que
e) le signal de régulation momentanément le plus important est envoyé à un seul organe de réglage du débit massique de la matière fumable.

2. Procédé suivant la revendication 1, caractérisé en ce que des signaux de régulation sont générés sur la base de la dureté du cordon de matière fumable, de la résistance au tirage du cordon, et/ou du poids du cordon, et comparés entre eux.

3. Procédé suivant l'une des revendications 1 ou 2, caractérisé en ce que des écarts de combinaisons, en particulier de combinaisons linéaires, sont calculés sur la base d'au moins deux valeurs effectives des caractéristiques saisies.

4. Procédé suivant l'une des revendications 1 à 3, caractérisé en ce que des disques apprêteurs ou une étaleuse sont utilisés comme organe unique de réglage du débit massique de la matière fumable.

5. Procédé suivant l'une des revendications 1 à 4, caractérisé en ce que l'humidité et/ou la vitesse machine est/sont prise(s) en compte lors de la génération du signal de régulation destiné à au moins l'une des caractéristiques.

6. Dispositif permettant de réguler au moins deux caractéristiques physiques d'un cordon de matière fumable, essentielles à la qualité du produit fini, pour la mise en oeuvre du procédé suivant la revendication 1, en particulier dans la fabrication des cigarettes,

   a) comportant au moins deux palpeurs (30, 31, 32) pour la saisie des valeurs effectives de deux caractéristiques physiques du cordon, et

   b) des régulateurs (38, 40, 44) pour la génération de signaux de régulation destinés à des organes de réglage (22) influençant la masse de la matière fumable constitutive du cordon, sur la base d'écarts relevés entre les valeurs effectives et les valeurs de consigne des caractéristiques physiques,

   caractérisé par :

   c) un opérateur logique à autosélection (42, 46) pour comparer entre eux les signaux de régulation générés, et pour transmettre le signal de régulation momentanément le plus important à un organe de réglage (22) unique pour le débit massique.

7. Dispositif suivant la revendication 6, caractérisé en ce que des palpeurs (30, 31, 32) et des régulateurs (38, 40, 44) sont prévus pour la dureté du cordon de matière fumable, pour la résistance au tirage du cordon et/ou pour le poids du cordon.

8. Dispositif suivant l'une des revendications 6 ou 7, caractérisé en ce que des dispositifs (54, 56) sont prévus entre les palpeurs (30, 31, 32) et les régulateurs (38, 40, 44), en vue de combiner les signaux de sortie d'au moins deux palpeurs (30, 31, 32).

9. Dispositif suivant la revendication 8, caractérisé en ce que les dispositifs combinatoires sont matérialisés par des additionneurs à pondération (54, 56).

10. Dispositif suivant l'une des revendications 6 à 9, caractérisé en ce que des disques apprêteurs (22) ou une étaleuse sont utilisés comme seul organe de réglage du débit massique.

Fig. 1

Cig. Papier

Tabak

ZW

D

EP 0 242 824 B1

Fig. 2

Fig. 3